# EUROPEAN PATENT APPLICATION

(11) **EP 4 804 496 A1**
(43) Date of publication of application: **09.09.2026**
(21) Application number: 26161904.3
(22) Date of filing: 03.03.2026
(51) Int. Cl.: H04L 67/12, A42B 3/30, H04B 1/3827, H04W 4/80, H04W 84/18, H04W 88/06

(54) **HELMET MOUNTED DEVICE-TO-DEVICE WIRELESS MESH COMMUNICATIONS NETWORK**

(30) Priority: 06.03.2025 US 202563767968 P
(71) Applicant: Wilcox Industries Corp., Newington, NH 03801 (US)
(72) Inventor: TEETZEL,, James W., Newington, NH 03801 (US); Turner, Elliott S., Newington, NH 03801 (US); RIEL, Robert E., Newington, NH 03801 (US)
(74) Representative: FRKelly

(57) **Abstract**

A system comprises a helmet power and communication hub having a first wireless communication interface (e.g., high band width, ultra wide band (UWB), or 5G communication interface) and a plurality of helmet mounted accessory devices. Each helmet mounted accessory device has a respective wireless communication interface (e.g., high band width, ultra wide band (UWB), or 5G communication interface). The helmet power and communication hub is configured to receive a power supply, wherein the power supply is configured to provide power to each of the plurality of helmet mounted accessory devices when the plurality of helmet mounted accessory devices are operatively coupled to the helmet power and communication hub. The helmet power and communication hub and the plurality of helmet mounted accessory devices are configured to communicate with each other through a mesh network.

## Description

### CROSS REFERENCE TO RELATED APPLICATIONS

This application claims the priority benefit of U.S. Provisional Patent Application No. 63/767,968 filed March 6, 2025. The aforementioned application is incorporated herein by reference in its entirety.

### INCORPORATION BY REFERENCE

The subject matter of this application is related to U.S. nonprovisional application Serial No. 18/544,128 filed December 18, 2023, and U.S. nonprovisional application Serial No. 18/614,070 filed March 22, 2024. Each of the aforementioned applications is incorporated herein by reference in its entirety.

### BACKGROUND

The present disclosure relates to a helmet accessory system wherein accessory devices are configured to communicate with other accessory devices within a communication range through a wireless, e.g., 5G, mesh network.

### SUMMARY

In one aspect, a system comprises a helmet power and communication hub having a first wireless communication interface and a plurality of helmet mounted accessory devices. Each helmet mounted accessory device has a respective wireless communication interface. The helmet power and communication hub is configured to receive a power supply, wherein the power supply is configured to provide power to each of the plurality of helmet mounted accessory devices when the plurality of helmet mounted accessory devices are operatively coupled to the helmet power and communication hub. The helmet power and communication hub and the plurality of helmet mounted accessory devices are configured to communicate with each other through a mesh network. In embodiments, the first wireless communication interface on the helmet power and communication hub and the respective wireless communication interfaces on the helmet mounted accessory devices are 5G communication interfaces. In alternative embodiments, other high bandwidth wireless communication interfaces may be employed, such as ultra wide band communication interfaces.

In one aspect, a system comprises a helmet power and communication hub having a first wireless communication interface. A plurality of helmet mounted accessory devices are provided, each helmet mounted accessory devices having a respective wireless communication interface. The helmet power and communication hub is configured to receive a power supply which is configured to provide power to each of the plurality of helmet mounted accessory devices when the plurality of helmet mounted accessory devices are operatively coupled to the helmet power and communication hub. The helmet power and communication hub and the plurality of helmet mounted accessory devices are configured to communicate with each other through a mesh network.

In a more limited aspect, the first wireless communication interface and each respective wireless communication interface is a 5G interface.

In another more limited aspect, the first wireless communication interface and each respective wireless communication interface is a high bandwidth wireless communication interface.

In another more limited aspect, the first wireless communication interface and each respective wireless communication interface is an ultra wide band communication interface.

In another more limited aspect, the helmet power and communication hub is configured to provide a wireless gateway to a body worn interface device.

In another more limited aspect, the body worn interface is configured to operatively couple to an external computer based information handling system.

In another more limited aspect, the external computer based information handling system is selected from the group consisting of a smart phone, tablet, laptop computer, mobile computing device, a tactical radio, and any combination of the foregoing.

In another more limited aspect, the external computer based information handling system is configured to provide an interface between the mesh network and a remote command and control center.

In another more limited aspect, the body worn interface device is configured to operatively couple to one or more sensors.

In another more limited aspect, the one or more sensors are selected from the group consisting of one or more physiological sensors, one or more environmental sensors, or any combination thereof.

In another more limited aspect, the body worn interface device is configured to provide a wireless gateway to a weapon mounted interface device.

In another more limited aspect, the helmet power and communication hub is configured to provide a wireless gateway to a weapon mounted interface device.

In another more limited aspect, the mesh network is configured to utilize an encryption algorithm to secure data transmissions between the helmet mounted accessory devices.

In another more limited aspect, the mesh network is selected from the group consisting of a full mesh network and a partial mesh network.

In another more limited aspect, the mesh network is a closed mesh network.

Various advantages and benefits of the present disclosure will become apparent to those of ordinary skill in the art upon reading and understanding the following detailed description of the preferred embodiments.

### BRIEF DESCRIPTION OF THE DRAWINGS

The invention may take form in various components and arrangements of components, and in various steps and arrangements of steps. The drawings are only for purposes of illustrating preferred embodiments and are not to be construed as limiting the invention.
FIG. 1 is a diagram illustrating an exemplary system and showing power and wireless data connectivity between various helmet-borne devices.
FIG. 2 is an isometric view of the system appearing in FIG. 1 operably coupled to a helmet including a helmet mount assembly having a first exemplary visual augmentation device attached.
FIG. 3 is an isometric view of the system appearing in FIG. 1 operably coupled to a helmet including a helmet mount assembly having a second exemplary visual augmentation device attached.
FIG. 4 is a schematic diagram illustrating a mesh network according to the embodiments appearing in FIGS. 2 and 3.
FIG. 5, which comprises FIG. 5A and FIG. 5B, is a diagram illustrating wireless data connectivity between various helmet-borne, weapon-borne, and body-worn devices.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation of the invention, not limitation of the invention, which may be embodied in various forms. Therefore, specific structural and functional details disclosed herein are not to be interpreted as limiting but merely as a basis for the claims and as a representative basis for teaching one skilled in the art to variously employ the present inventive concept in virtually any appropriately detailed structure. Further, the terms and phrases used herein are not intended to be limiting but rather to provide an understandable description of the present development. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims.

The terms "a" or "an," as used herein, are defined as one or more than one. The term "another," as used herein, is defined as at least a second or more. The terms "including" and/or "having" as used herein, are defined as comprising (i.e., open transition). The term "coupled" or "operatively coupled," as used herein, is defined as indirectly or directly connected.

As used in this application, the terms "front," "rear," "upper," "lower," "upwardly," "downwardly," "left," "right," and other orientation descriptors are intended to facilitate the description of the exemplary embodiment(s) of the present invention, and are not intended to limit the structure thereof to any particular position or orientation.

All numbers herein are assumed to be modified by the term "about," unless stated otherwise. The recitation of numerical ranges by endpoints includes all numbers subsumed within that range (e.g., 1 to 5 includes 1, 1.5, 2, 2.75, 3, 3.80, 4, and 5).

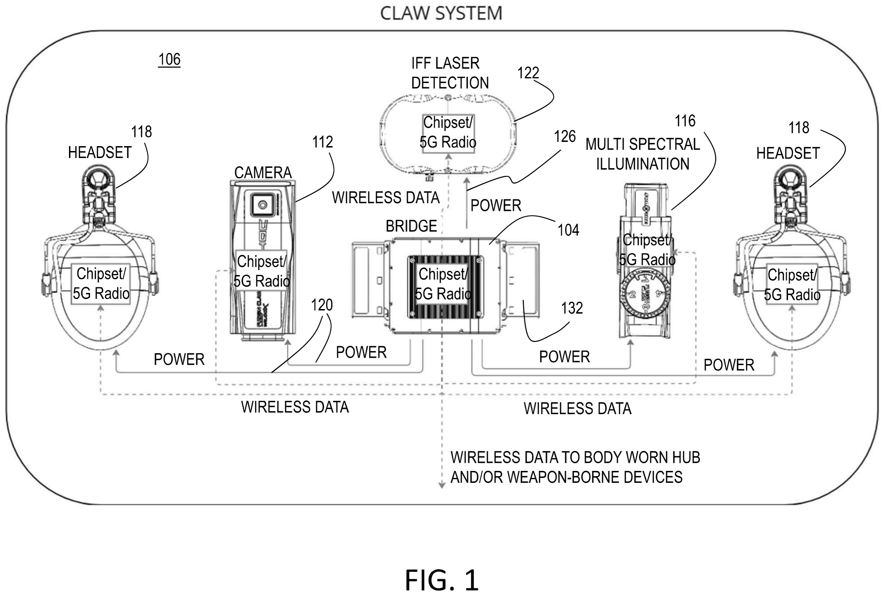

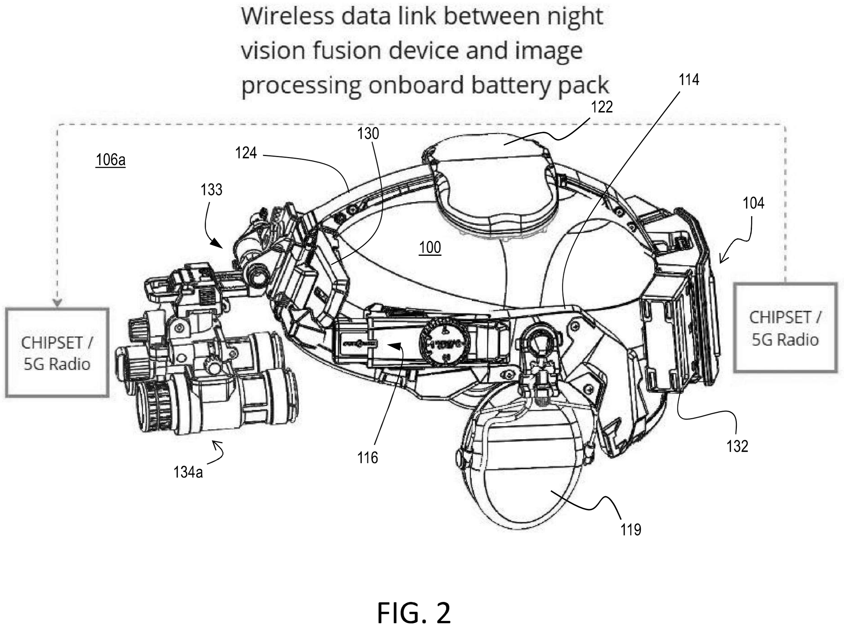

Referring to FIG. 1, there is shown an exemplary helmet accessory system **106** operable to embody the present invention which is configured for mounting on a helmet **100** (see FIGS. 2, 3, and 5).

The system **106** includes a helmet power and communication hub **104.** In embodiments, the helmet power and communication hub **104** is coupled to a bracket disposed at a rear portion of the helmet **100.** The helmet power and communication hub **104** is configured to detachably couple to one or more battery packs **132** for providing electrical power to one or more electronic accessory devices. FIG. 1 illustrates one example configuration of accessory devices; however, it is understood that various other configurations, combinations, and types of accessory devices may be used without departing from the scope of the present disclosure.

Referring now to FIG. 2 and with continued reference to FIG. 1, in embodiments, the system **106** includes a camera **112** coupled to a first side bracket or shroud **114** and an illumination device such as a flashlight, multispectral illumination device, etc. **116** which is coupled to a second side shroud or bracket **114.** Left and right over ear head set assemblies **119** are likewise coupled to the respective side brackets **114.** Electrical circuitry **120** in the side shrouds **114** provides an electrical coupling between the devices **112, 116,** and **119** for providing power from the battery packs **132** and helmet power and communication hub **104.**

In embodiments, the system **106** includes an identification friend or foe (IFF) module **122** coupled to a cable or circuit routing conduit **124.** In embodiments, the IFF unit **122** is configured to emit or transmit identification that distinguishes the wearer as an allied force to other allied forces, activate a transponder to send a response signal confirming its identity as a friendly unit when the IFF unit detects a laser from a friendly laser source, and/or trigger an audible, visual, haptic, or on screen warning to alert the wearer when the IFF unit detects a laser from an enemy or unknown laser source. Electrical circuitry **126** in the cable or circuit routing conduit **124** provides an electrical coupling between the device IFF module **122** for providing power from the battery packs **132** and helmet power and communication hub **104.** It will be recognized that, although specific components are shown and described, other devices not explicitly illustrated may also be provided for communication over the system 106, such as a tactical radio, smart watch, and others.

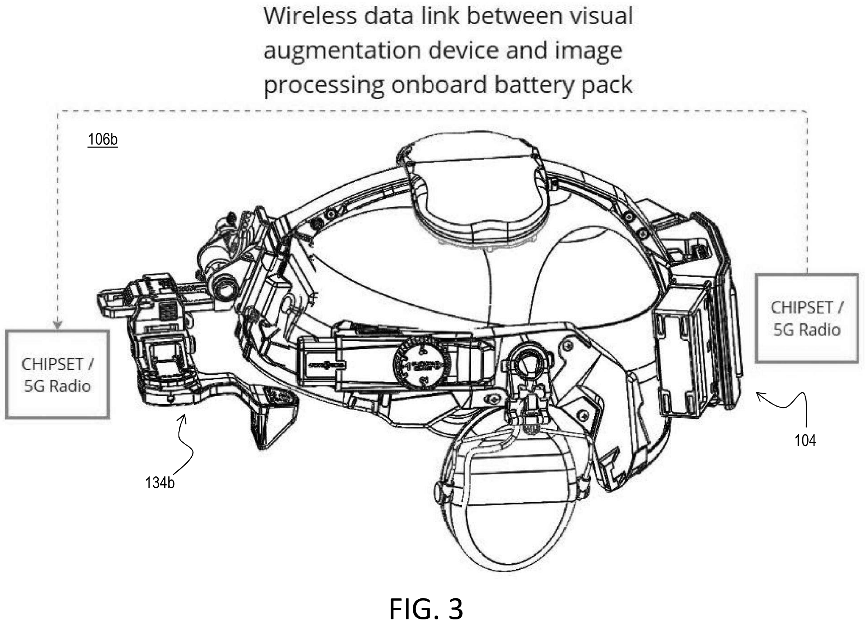

Referring now to FIGS. 2 and 3, there are shown the helmet **100** having a system **106a** and **106b,** respectively, mounted thereon. The system further includes a front shroud or bracket **130** having a helmet mount assembly **133** coupled thereto. A visual enhancement device **134a, 134b** in turn, is coupled to the helmet mount assembly.

In FIG. 2, the visual enhancement device **134a,** comprises a night vision fusion device which comprises a night vision device with a head-up display (HUD) configured to project or overlay HUD display information onto the user's field of view while allowing simultaneous viewing of the intensified image of the night vision device. It will be recognized that the HUD can be combined with other visual enhancement technologies, including optical devices, camera displays/monitors, and thermal camera displays/monitors.

In certain embodiments, the HUD is configured to display information such as targeting and or augmented reality data. The HUD is arranged with an optical element that can take the form of a beam splitter, dichroic mirror, waveguide, or similar technology such that the digitally generated image is overlaid onto a glass lens and reflected back towards the user's eye(s). The optical element is designed such that digital HUD elements are combined with the user's field of view subsequently projecting digital information into a 3D world space.

In FIG. 3, the visual enhancement device **134b** is a HUD assembly comprising a HUD arranged with an optical element that can take the form of a beam splitter, dichroic mirror, wave guide, or similar technology such that the digitally generated image is overlaid onto a glass lens and reflected back towards the user's eye(s). The optical element is designed such that digital HUD elements are combined with the users field of view subsequently projecting digital information into a 3D world space.

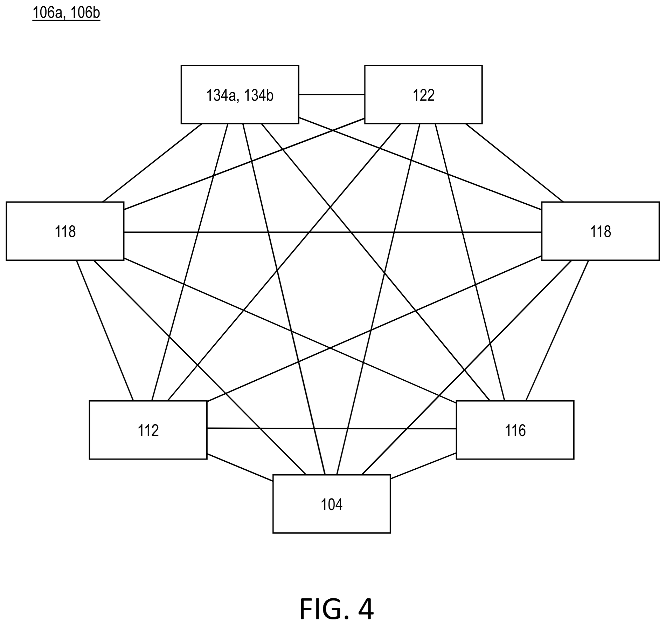

Referring now to FIG. 4, each accessory component of the system **106a, 106b** is configured to communicate wirelessly with other accessory components of the respective system **106a, 106b** located in proximity via a wireless personal area network (PAN) having a mesh network topology that facilitates communication and transport of data between accessory component devices. In a mesh network, all devices can communicate with all other devices in the network, either directly if in range or indirectly via one or more intermediate nodes if they are not. This is in contrast to other network types that commonly feature a central hub like a router, through which all traffic must flow. Mesh networks do not require a central hub and provide multiple ways of transferring data from one device to another. In embodiments, the devices are configured to autonomously establish and adjust their connections with each other in real-time, allowing for flexible data routing and communication without the need for a central hub and enabling devices to join or leave the network seamlessly as conditions change.

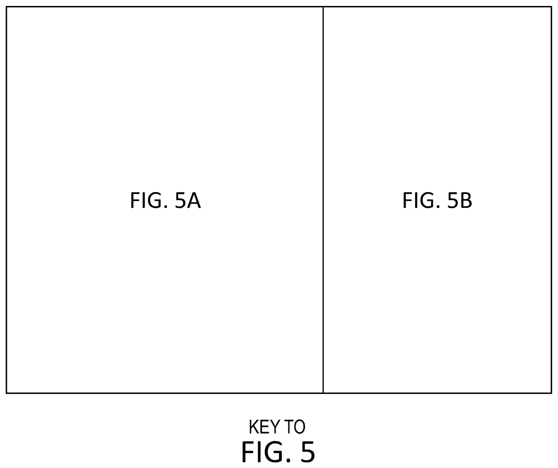

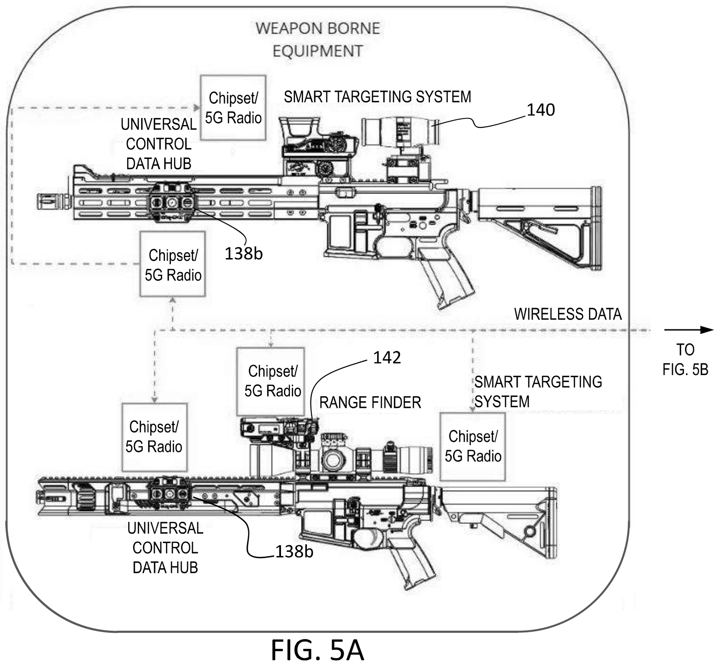

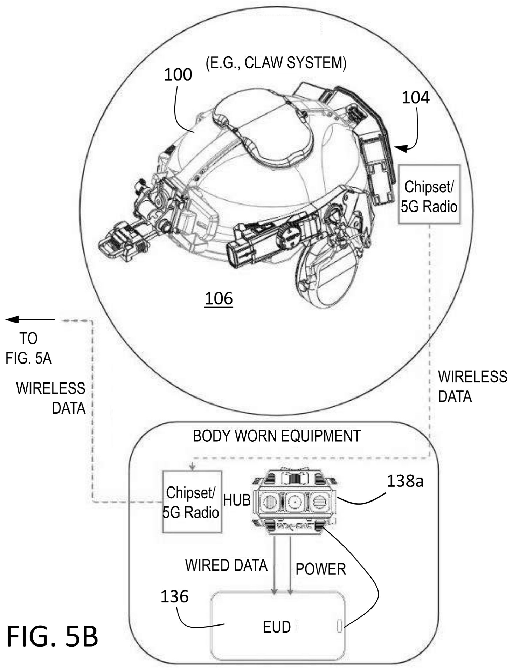

The mesh network also facilitates communication and transport of data between the accessory components devices of the system **106a, 106b** and one or more external electronic devices such as a smartphone, tablet, laptop computer, or other portable or mobile computing device **136,** a wearable interface device **138a** (see FIG. 5B), or a weapon borne interface device **138b** (see FIG. 5A).

The wearable interface device **138a** and the weapon borne interface device **138b,** each of which may also be referred to herein as a hub and/or a controller, are components configured to provide one or more of: (a) mediation of communications; (ii) aggregation and/or routing of data; and (iii) distribution and/or management of power between devices associated with a subsystem, such as a wearable or weapon borne accessory subsystem, respectively. The terms "hub" or "controller" are not intended to require distinct physical components unless expressly stated.

In embodiments, the wearable interface device **138a** and/or the weapon borne interface device **138b** may be a central network controller or data hub device as shown and described in commonly owned U.S. Patent No. 12,228,376, the entire contents of which are incorporated herein by reference.

In certain embodiments, when an accessory device is not natively compatible with the PAN protocol, bridge hardware may be used to enable communication between the device and the PAN.

In embodiments, the wireless communication interface between the accessory devices is a 5G wireless interface. In embodiments, each device is equipped with a 5G chipset, which includes the necessary hardware components and communication protocols to enable communication over a 5G wireless interface. In some embodiments, the term "5G" refers to the fifth-generation mobile communication standard as defined by the 3rd Generation Partnership Project (3GPP) in Release 15 and subsequent releases. In alternative embodiments, the term "5G" may be defined in accordance with different versions of the standard or alternative industry conventions, as appropriate for a given implementation.

In embodiments, the devices disclosed in at least U.S. nonprovisional application Serial No. 18/544,128 filed December 18, 2023, and U.S. nonprovisional application Serial No. 18/614,070 filed March 22, 2024 (hereinafter, collectively, "the CLAW inventions"), each of which application is incorporated herein by reference in its entirety, may be adapted for use with the system in accordance with this disclosure by equipping them with a 5G chipset. In the CLAW inventions, a helmet-mounted rear bridge battery interface module provides both data and power to other helmet-mounted devices. The data communication between the various helmet-mounted devices used in connection with the CLAW inventions is wired in connection with the rear bridge. As compared with the CLAW inventions, the present development simplifies the mechanical interface between the helmet-mounted devices. Because data transmission is wireless, the mechanical interface need only support power lanes. In addition, the present development allows for data transmission between weapon-mounted and body-worn devices without wires or other tethering that would make donning the user's ensemble difficult; possibly impede movement within the ensemble; and may be easily damaged.

Now referring to FIG. 5, in embodiments, the system **106, 106a,** or **106b** is configured to facilitate communications between the helmet-borne devices, weapon-borne devices, and body-worn devices. In embodiments, the helmet-borne devices include a vision enhancement device such as the night vision fusion device **134a;** a visual augmentation device **134b;** headsets **118;** a camera **112;** an IFF module **122;** and a multispectral illumination device **116.** Other devices and sensors are also contemplated. In certain embodiments, an inertial measurement unit (IMU) for tracking the head pose of the user (not shown) is provided. As shown in FIG. 1, the battery modules **132** provide power to each device **112, 116, 118,** and **122** disposed on the helmet system **106.**

In certain embodiments, wireless data communication is via a full mesh network topology as illustrated in FIG. 4. In alternative embodiments, wireless data communication is via a partial mesh network wherein certain nodes establish direct communication links with multiple other nodes, while others communicate indirectly via intermediate nodes. This configuration balances network robustness and resource efficiency, enabling scalable and resilient peer-to-peer communication among devices with the cost of having every node connected to every other node.

In certain embodiments, the mesh network is a closed mesh network, e.g., wherein communication via the network is restricted to nodes authenticated using a network-specific credential and wherein routing information is exchanged only among authenticated nodes.

In embodiments, the helmet power and communication hub **104** maintains mesh connectivity with the helmet borne devices as described above while also serving as a gateway or bridge to the body worn controller or hub **138a.** In embodiments, the body worn controller or hub **138a** is coupled via a wired (e.g., USB) power and data connection to the end user device (EUD) **136.** In embodiments, the EUD **136** is an Android smartphone, e.g., a Samsung phone. However, other types of smartphones, such as those operating on the iOS platform, are also contemplated. The body worn controller or hub **138a,** in turn, may be coupled to other devices or sensors, such as one or more physiological monitoring sensors, GPS units, altimeters, accelerometers, and the like.

In embodiments, the body worn controller or hub **138a** further serves as a gateway or bridge between the helmet power and communication hub **104** and a weapon mounted universal controller or hub **138b.** The weapon-borne weapon mounted universal controller or hub **138b** is in mesh communication with a plurality of weapon mounted devices, such as a smart targeting system **140** and an optical range finder **142** as shown in the illustrated embodiment. Other electronic weapon mounted accessory devices include ballistic computers, fire control systems, projectile velocity sensors, barrel temperature sensors, round counter, and others.

In still further embodiments, the helmet power and communication hub **104** maintains mesh connectivity with the helmet borne devices as described above while also serving as a gateway or bridge directly to the weapon mounted universal controller or hub **138b.**

In embodiments, the helmet-borne, weapon-borne, and/or body-worn device includes sensors (not shown), such as sensors of the user's health statistics (e.g., pulse rate, body temperature, etc.) and/or environmental sensors (e.g., temperature, humidity, etc.). The various devices listed above are exemplary only. In embodiments the devices include other devices commonly used in the art, as would be understood by persons skilled in the art.

In embodiments, information from the system **106** is transmitted to a remote command and control center or base station through the EUD **136.** In embodiments, the EUD **136** is a body-worn device. In embodiments, the EUD **136** is a mobile computing device, such as a smartphone. In embodiments where data is transmitted to a remote command and control center, the system **106** utilizes a low power RF PAN to facilitate communication between the user and the command and control center while maintaining a more clandestine profile. In embodiments, the system **106** acts as a bridge to the tactical radios of the command and control center or base station.

In embodiments the helmet power and communication hub **104** acts as a gateway or bridge for communicating with a like PAN of another user to facilitate communication of data, such as situational data, between multiple users, typically in relatively close proximity to one another.

In embodiments, the PAN in accordance with this disclosure utilizes an encryption algorithm to secure data transmissions between devices.

In embodiments, certain portions of the network may be segmented within the PAN with a VLAN-like strategy into one or more subnetworks. In some circumstances, such segmentation enhances security. In some circumstances, such segmentation is used to prioritize or enhance critical activities. For example, in embodiments, a segment of the PAN includes only the mesh network of helmet-borne devices, focusing on gathering situational information such as head pose tracking and sensor metrics, and excluding information such as range and targeting information that would be gathered from weapon-borne devices. In some circumstances, such segmentation facilitates modularization between different generations of device technologies.

In embodiments, the PAN takes advantage of the modularity of the CLAW inventions and similar existing technology. For example, devices not currently configured for compatibility with the 5G wireless technology may connect to the PAN using bridge hardware. The CLAW inventions were specifically designed for easy subdivision of component devices into separate functional domains to allow for adaptation to and with future technology, such as the enhanced data transmission provided by the system herein.

In embodiments, the system allows for sharing sensor and controls data. In embodiments, the present system allows for wireless device control by the user or an operator remote from the user, such as another user on the PAN or an operator at the command and control center or base camp. For example, if the user is non-responsive, the remote operator may use the PAN to operate certain devices to gather information around and about the non-responsive user.

The invention has been described with reference to the preferred embodiment. Modifications and alterations will occur to others upon a reading and understanding of the preceding detailed description. It is intended that the invention be construed as including all such modifications and alterations insofar as they come within the scope of the appended claims.

## Claims

1. A system comprising:
a helmet power and communication hub having a first wireless communication interface;
a plurality of helmet mounted accessory devices, each helmet mounted accessory devices having a respective wireless communication interface;
the helmet power and communication hub configured to receive a power supply, the power supply configured to provide power to each of the plurality of helmet mounted accessory devices when the plurality of helmet mounted accessory devices are operatively coupled to the helmet power and communication hub; and
wherein the helmet power and communication hub and the plurality of helmet mounted accessory devices are configured to communicate with each other through a mesh network.

2. The system of claim 1, wherein the first wireless communication interface and each respective wireless communication interface is a 5G interface.

3. The system of claim 1 or claim 2, wherein the first wireless communication interface and each respective wireless communication interface is a high bandwidth wireless communication interface.

4. The system of any of the preceding claims, wherein the first wireless communication interface and each respective wireless communication interface is an ultra wide band communication interface.

5. The system of any of the preceding claims, wherein the helmet power and communication hub is configured to provide a wireless gateway to a body worn interface device.

6. The system of claim 5, wherein the body worn interface is configured to operatively couple to an external computer based information handling system.

7. The system of claim 6, wherein the external computer based information handling system is selected from the group consisting of a smart phone, tablet, laptop computer, mobile computing device, a tactical radio, and any combination of the foregoing.

8. The system of claim 6 or claim 7, wherein the external computer based information handling system is configured to provide an interface between the mesh network and a remote command and control center.

9. The system of any of claims 6-8, wherein the body worn interface device is configured to operatively couple to one or more sensors.

10. The system of claim 9, wherein the one or more sensors are selected from the group consisting of one or more physiological sensors, one or more environmental sensors, or any combination thereof.

11. The system of any of claims 5 to 10, wherein the body worn interface device is configured to provide a wireless gateway to a weapon mounted interface device.

12. The system of any of the preceding claims, wherein the helmet power and communication hub is configured to provide a wireless gateway to a weapon mounted interface device.

13. The system of any of the preceding claims, wherein the mesh network is configured to utilize an encryption algorithm to secure data transmissions between the helmet mounted accessory devices.

14. The system of any of the preceding claims, wherein the mesh network is selected from the group consisting of a full mesh network and a partial mesh network.

15. The system of any of the preceding claims, wherein the mesh network is a closed mesh network.
